# EUROPÄISCHE PATENTSCHRIFT

(11) **EP 0 306 773 B1**
(45) Veröffentlichungstag und Bekanntmachung des Hinweises auf die Patenterteilung: **24.03.1993**
(21) Anmeldenummer: 88113759.0
(22) Anmeldetag: 24.08.1988
(51) Int. Cl.: A23L 1/236, A23P 1/02, A23L 1/05, A23L 1/305

(54) **Zuckerfreie Bindemittel**
Sugarless binding agent
Liant sans sucre

(30) Priorität: 05.09.1987 DE 3729831
(43) Veröffentlichungstag der Anmeldung: 15.03.1989
(73) Patentinhaber: MERCK PATENT GmbH, D-64271 Darmstadt (DE); Deutsche Gelatine-Fabriken Stoess & Co.GmbH, 69412 Eberbach (DE)
(72) Erfinder: Dehne, Lutz, Dr., D-6100 Darmstadt (DE); Möschl, Gernot, D-6108 Weiterstadt (DE); Diermayr, Peter, Dr., D-6100 Darmstadt (DE); Hoffmann, Peter, D-6900 Heidelberg (DE)

(56) Entgegenhaltungen:
- EP-A- 0 073 908
- WO-A-85/04078
- DE-A- 3 434 283
- FR-A- 2 116 021
- FR-A- 2 236 005
- FR-A- 2 321 849
- FR-A- 2 332 027
- R.A.GRANT: "Applied Protein Chemistry" 1980, Applied Science Publishers, London

## Beschreibung

Die Erfindung betrifft zuckerfreie Bindemittel, enthaltend Zuckeraustauschstoff und Getreidehydrolysat in einem Gewichtsverhältnis zwischen 3:1 und 1:3 in agglomerierter Form. Sie sind geeignet zur Herstellung von geformten, vorzugsweise Granula enthaltenden Lebensmittelmassen, insbesondere von Getreideriegeln.

Geformte Lebensmittel der unterschiedlichsten Zusammensetzungen wie z.B. Getreide- oder Müsliriegel haben in letzter Zeit einen nicht unerheblichen Marktanteil in der Lebensmittelbranche erobert. Als wertvolle biologische Kost mit meist hohen Ballaststoffanteilen dienen sie auch wegen ihrer guten Haltbarkeit und Transportierbarkeit als beliebte Zwischenmahlzeit. Bei der Herstellung von solchen Getreideriegeln oder anders geformter, getreidehaltiger Lebensmittel spielen Bindemittel eine essentielle Rolle, da diese Produkte aufgrund ihrer meist hohen Trockenanteile wie Getreide, Trockenfrüchte etc. leicht zum Auseinanderbrechen und Bröseln neigen. Als Bindemittel werden herkömmlicherweise vor allem Zucker, Honig, Glukosesirup, Maltodextrine, Melasse, aber auch Stärke sowie pflanzliche oder tierische Fette eingesetzt. Diese Bindemittel sowie gegebenenfalls weitere Rezepturbestandteile wie beispielsweise Süß- und Aromastoffe, Vitamine oder Frucht- und Kakaopulver müssen in separaten Ansätzen in das Herstellungsverfahren eingebracht werden, um ein Verkleben und Verklumpen der Masse zu vermeiden und somit eine optimale Vermischung der Komponenten zu gewährleisten. Dadurch erhöht sich naturgemäß der Arbeitsaufwand, insbesondere der Reinigungsaufwand für die verwendeten Behälter, Mischer und sonstigen Geräte der Herstellungsanlage. Die herkömmlich verwendeten Bindemittel müssen zudem vor Vermischung mit anderen Rezepturbestandteilen und vor Ausformung der Masse in meist langwierigen Prozessen in Kochanlagen konzentriert werden. Die hierbei entstehenden sirupähnlichen, hochviskosen Massen sind sehr klebrig, wodurch es notwendig wird, die kontaktführenden Anlageteile zu temperieren oder mit Trennmitteln zu versehen, um das Anhaften und Festkleben der zu verarbeitenden Masse zu verhindern. Weiter nachteilig bei der herkömmlichen Riegelherstellung ist, daß, bedingt durch die verwendeten Bindemittel, die Verfestigungs- bzw. Abbindezeiten der geformten Masse selbst bei intensiver Kühlung relativ lang sind und das Fertigprodukt aufgrund des durch das Bindemittel eingebrachten Wassers noch so feucht ist, daß es ohne weitere Trocknung zu Texturveränderungen und anderen nachteiligen Effekten kommen kann. Die mit den herkömmlichen Bindemitteln hergestellten Formmassen, insbesondere Getreideriegel,weisen naturgemäß, um die erforderliche Bindefähigkeit der Rezepturbestandteile sicherzustellen, einen mehr oder weniger hohen Kohlenhydratanteil auf. Sie sind daher aus diätetischen, medizinischen und zahnmedizinischen Gründen für einen bestimmten Kreis von Konsumenten nicht oder nur beschränkt geeignet. Ein in diesem Zusammenhang naheliegender Ersatz von Zucker durch beispielsweise Fructose oder Sorbit ist nicht möglich, da diese Stoffe eine nur geringfügige Bindefähigkeit besitzen.

Es bestand somit die Aufgabe, neue Bindemittel, geeignet zur Herstellung von geformten, vorzugsweise Granula, insbesondere Getreide, enthaltenden Lebensmitteln zur Verfügung zu stellen, welche die genannten technologischen und gesundheitlichen Nachteile nicht mehr aufweisen oder aber zumindest eine deutliche Verbesserung bewirken.

Überraschend wurde gefunden, daß Zuckeraustauschstoff und Eiweißhydrolysat in agglomerierter Form ausgezeichnete Bindemittel darstellen. Sie sind in hervorragender Weise für die Herstellung von geformten, vorzugsweise Granula enthaltenden Lebensmittelmassen, insbesondere von Getreideriegeln, geeignet, und ermöglichen, daß das Herstellungsverfahren einfacher, schneller, effektiver und kostengünstiger gestaltet werden kann, und daß so Produkte mit verbesserten Eigenschaften und guter Geschmacksqualität erhalten werden können.

Gegenstand der Erfindung ist somit ein zuckerfreies Bindemittel für Lebensmittel, dadurch gekennzeichnet, daß es Zuckeraustauschstoff und Eiweißhydrolysat in agglomerisierter Form in einem Gewichtsverhältnis zwischen 3:1 und 1:3 enthält, wobei das Eiweißhydolysat einen mittleren Molekulargewichtsbereich von 1 000 bis 100 000 Dalton aufweist, und daß es in Granulatform mit einer Teilchengröße von 0,05 bis 2 mm vorliegt.

Gegenstand der Erfindung ist ferner die Verwendung solcher Bindemittel bei der Herstellung von geformten, vorzugsweise Granula enthaltenden Lebensmittelmassen.

Aus der FR-A-23 21 849 sind Eiweißhydrolysate bestimmter Proteine mit einem definierten Molekulargewichtsbereich bekannt. Sie dienen aber als Lebensmittel-Zusatzstoffe im Falle ungenügender Ernährung.
Aus der DE-A-34 34 283 sind Gummi- und Gelleesüßwaren bekannt, die sich aus Kohlenhydrat und Proteinhydrolysat zusammensetzen. Solche Mischungen dienen hier der Verbesserung des Geschmacks und der Lagerstabilität.

In dem genannten Stand der Technik werden jedoch keine Bindemittel für Lebensmittelmassen offenbart oder nahegelegt, die Zuckeraustauschstoffe und Eiweißhydrolysate in agglomerierter Form enthalten.

Die erfindungsgemäßen Bindemittel enthalten Zuckeraustauschstoff und Eiweißhydrolysat. Dabei ist es erfindungswesentlich, daß das Bindemittel in einheitlicher fertiger Form vorliegt. Als einheitliche Form wird hierbei ein Agglomerat von Zuckeraustausch- und Eiweißhydrolysat-Partikeln verstanden, wobei stabile Bindemittel-Granulatpartikel von gleichbleibender Zusammensetzung mit einem spezifischen Teilchengröße-Bereich entstehen. Die Teilchengröße der erfindungsgemäßen Bindemittel-Granulate liegt zwischen 0,05 und 2 mm, vorzugsweise zwischen 0,2 und 1 mm. Besonders geeignet sind Granulate zwischen 0,1 und 0,5 mm. Die Herstellung solcher Granulate bzw. Agglomerate erfolgt in an sich bekannter Weise. In der Regel werden hierbei die beiden Hauptkomponenten Zuckeraustauschstoff mit einem mittleren Kornspektrum von 0,05 bis 0,80 mm und Eiweißhydrolysat mit einer mittleren Teilchengröße zwischen 0,01 und 0,5 mm intensiv miteinander vermischt. In diese Trockenmischung wird, bezogen auf das Trockengewicht, 2 bis 5 % Wasser oder gesättigter Wasserdampf durch beispielsweise Einleiten, Aufsprühen oder ähnliche bekannte Techniken mit oder ohne gleichzeitige Luftverwirbelung eingebracht. Gegebenenfalls können während des Granulierungsvorganges in bekannter Weise weitere Stoffe zugesetzt werden, welche die Oberflächensprödigkeit, die Riesel- und/oder Lagerfähigkeit erhöhen, so beispielsweise Calciumphosphat oder Gummi arabicum, oder die, wie unten näher kommentiert, der Steigerung der Bindefähigkeit oder der Lebensmittelverbesserung dienlich sind. Ein Einbringen der Einzelkomponenten Zuckeraustauschstoff und Eiweißhydrolysat in die restliche Lebensmittelmasse ohne vorangehende Agglomerat- bzw. Granulatbildung ist zwar prinzipiell möglich, jedoch werden in diesem Fall überraschenderweise keine oder nur geringfügige vorteilhafte, erfindungsgemäße Resultate erzielt. Der Einsatz von einheitlichen Bindemittel-Granulatpartikeln in einem bestimmten Teilchengröße-Spektrum führt somit zu einem überraschenden synergistischen Effekt.

Als Zuckeraustauschstoffe können erfindungsgemäß die hierfür bekannten Verbindungen verwendet werden. Bevorzugt sind dabei alle jene, die selbst eine gewisse eigene Bindefähigkeit aufweisen; so beispielsweise Sorbit, Xylit, Mannit, Maltit, Leucrose, Isomaltit/Glucopyranosido-1,6-Mannit, hydrierter Stärkesirup, Lactit, Fructose oder Gemische daraus. Besonders bevorzugt wird Sorbit eingesetzt. Als Eiweißstoffe eignen sich erfindungsgemäß alle in Wasser löslichen oder kolloidal löslichen Proteine pflanzlichen oder tierischen Ursprungs mit einem mittleren Molekulargewicht zwischen 1 000 und 100 000 Dalton, vorzugsweise zwischen 3 000 und 50 000 Dalton. Besonders gut eignen sich Protein-Hydrolysate mit einem mittleren Molekulargewicht zwischen 5 000 und 30 000 Dalton. Als Beispiele für geignete Eiweißhydrolysate sind Gelatine, Casein, Caseinate, Molke- oder Sojaproteine, Milchpulver oder Klebereiweiß bzw. deren jeweilige Hydrolysate zu nennen. Vorzugsweise wird Gelatine und/oder Klebereiweiß bzw. deren Hydrolysate eingesetzt. Erfindungsgemäß können auch Mischungen von verschiedenen Eiweißstoffen bzw. -hydrolysaten verwendet werden, um somit gegebenenfalls einen Nachgeschmack eines bestimmten intensiv schmeckenden Proteins zu überdecken. Bevorzugte Mischungen von Proteinhydrolysaten sind erfindungsgemäß Mischungen aus Gelatine und Klebereiweiß in beliebigen Verhältnissen.

Erfindungsgemäß variiert das Verhältnis zwischen Zuckeraustauschstoff und Eiweißhydrolysat zwischen 3:1 und 1:3. Werden Rezepturbestandteile mit naturgemäß höheren Wasseranteilen wie z.B. Früchte in die Riegelmasse eingearbeitet, so ist ein relativ höherer Eiweiß- als Zuckeraustauschstoff-Anteil im Bindemittel notwendig. Für die üblichen Getreideriegel ist ein Verhältnis Zuckeraustauschstoff zu Eiweißhydrolysat von etwa 2:1 bevorzugt.

Bezogen auf das Gesamtgewicht der Lebensmittelmasse variiert die Menge an einsetzbaren Zuckeraustauschstoff erfindungsgemäß vorzugsweise zwischen 1 und 20 %, insbesondere zwischen 5 und 10 %. Entsprechend variiert die Menge an einsetzbarem Eiweißhydrolysat vorzugsweise zwischen 1 und 40 %. Besonders bevorzugt sind Produkte mit etwa 3 bis 5 % Eiweißhydrolysat, bezogen auf Gesamtgewicht des Endprodukts. Demgemäß beträgt der bevorzugte Anteil der erfindungsgemäßen Bindemittelgranulate (ohne Zusatzstoff) am Endprodukt etwa 10 bis 15 %.

Die erfindungsgemäßen Bindemittel können auch pulverförmige oder flüssige Stoffe, die vorzugsweise vor der beschriebenen Agglomerierung bzw. Bindemittel-Granulatbildung zusammen mit den beiden Hauptkomponenten vermischt werden, enthalten, welche entweder einen zusätzlichen Einfluß auf die Bindekraft ausüben oder zur Veränderung oder Verbesserung des Geschmacks, der Haltbarkeit oder anderen Aspekten der Lebensmittelverbesserung dienen.

Stoffe, die eine zusätzliche, teilweise überraschende positive Wirkung auf die Bindefähigkeit und Konsistenz der Riegel entfalten, sind vorzugsweise Alginate, Alginsäure, Agar-Agar, Johannisbrotkernmehl, Guarkernmehl, Xanthan, Gummi arabicum, Pektine, Cellulose, native und modifizierte Stärken oder Mehle. Der Anteil dieser Substanzen am gesamten Bindemittel liegt vorzugsweise zwischen 0,1 und 10 %. Als Lebensmittelzusatzstoffe mit verbessernder Wirkung, die innerhalb der erfindungsgemäßen einheitlichen Bindemittel-Granulate bereitgestellt werden können, aber selbst keinen Einfluß auf die Bindekraft ausüben, sind beispielsweise Konservierungsstoffe, Antioxydantien, Emulgatoren, Stabilisatoren, Farbstoffe, Säureregulatoren, Säuerungsmittel, Fette, künstliche Süßstoffe, Vitamine, Mineralstoffe oder Spurenelemente zu nennen. Falls gewünscht, kann selbstverständlich auch Zucker beigemischt werden, z.B. wenn Zucker reduzierte Produkte bereitgestellt werden sollen.

Die erfindungsgemäßen Bindemittel weisen eine Reihe von bedeutsamen Vorteilen gegenüber den herkömmlichen Bindemitteln auf und ermöglichen so, eine zuckerfreie, aber süß schmeckende, in der Zusammensetzung variable Mischung in einheitlicher agglomerierter Form einzusetzen, die sowohl die Technologie der Herstellung von geformten Lebensmittelmassen vereinfacht als auch erlaubt, zahnfreundliche und für Diabetiker geeignete Getreideriegel oder ähnliche geformte, vorzugsweise getreidehaltige Lebensmittel herzustellen.

Durch die Bereitstellung eines einheitlichen Bindemittel-Granulates, welches Zuckeraustauschstoff und Eiweißhydrolysat als eigentliche Bindemittel-Komponente und gegebenenfalls Lebensmittelzusatzstoffe und/oder gegebenenfalls die Bindefähigkeit beeinflussende zusätzliche Bestandteile enthält, braucht bei der Herstellung der entsprechenden Massen nur ein einziger Ansatz erstellt zu werden (all-in-Verfahren). Somit entfällt das separate Ansetzen, Dosieren, Auflösen, Temperieren und Aufkonzentrieren der Bestandteile herkömmlicher Bindemittel. Dadurch verringert sich der Aufwand an Zeit und Energie erheblich, insbesondere was die Reinigung der Behälter und Apparaturen betrifft. Auch werden Fehldosierungen und Lebensmittelkontaminationen auf ein Mindestmaß beschränkt. Durch den Einsatz der erfindungsgemäßen Bindemittel wird weit weniger Wasser in die Masse eingebracht als bei der herkömmlichen Herstellung. Daher kann auf ein Nacherhitzen der Masse verzichtet werden. Zuckeraustauschstoff und Eiweißhydrolysat als die beiden Hauptkomponenten der neuen Bindemittel bewirken ferner eine ausgezeichnete Bindefähigkeit, die sie einzeln und in nicht agglomerierter Form nicht oder nur im beschränkten Maß zeigen. Entsprechend ihrer einstellbaren Anteile im Bindemittel-Granulat kann die Bindefähigkeit in einfacher Weise sehr variabel eingestellt und so den Eigenschaften der restlichen Masse angepaßt werden. Überraschend besitzen die mit den neuen Bindemitteln hergestellten Massen eine deutlich geringere Neigung, an Anlageteilen und Formen anzuhaften oder festzukleben. Auch zeigen die mit den erfindungsgemäßen Bindemitteln hergestellten Massen überraschend kurze Abbindezeiten. So können die fertigen Massen bei Raumtemperatur nach bereits maximal 30 Minuten abgepackt werden. Auf die herkömmliche Kühlung kann verzichtet werden. Auf die ernährungsphysiologischen Vorteile der neuen zuckerfreien Bindemittel wurde bereits hingewiesen.

### Beispiel 1:

In einem Kegelschneckenmischer werden 200 kg Sorbit und 100 kg Gelatinehydrolysat (MG: ca. 15 000 Dalton) innig miteinander vermischt und ca. 10 kg Wasser werden unter Mischen langsam auf die Oberfläche aufgedüst. Es entstehen nach ausreichender Mischdauer und Trocknung stabile Granulatpartikel von konstanter Zusammensetzung und einer mittleren Korngröße von 0,05 bis 2 mm.

### Beispiel 2:

Analog Beispiel 1 wird ein entsprechendes Granulat hergestellt. Am Ende des Mischvorganges werden ca. 10 kg Calciumphosphat zugesetzt, und wird weiter gemischt. Das entstehende Bindemittel-Granulat zeichnet sich durch eine besonders gute Rieselfähigkeit aus.

### Beispiel 3:

Analog Beispiel 1 werden 50 kg Sorbit und 30 kg Klebereiweißhydrolysat (MG: ca. 10 000 Dalton) miteinander vermischt und durch Zusatz von etwa 2 kg Wasser miteinander agglomeriert. Die entstehenden Granulatpartikel weisen ein mittleres Kornspektrum von 0,05 bis 2 mm auf.

### Beispiel 4:

In einem Kegelschneckenmischer werden 50 kg Sorbit, 25 kg Gelatine- und 25 kg Klebereiweißhydrolysat (MG: je ca. 10 000 Dalton) gut vermischt und mit ca. 3 kg Wasser in Form von Sattdampfschwaden, die über das Gemisch geleitet werden, versetzt. Es entstehen stabile Granulatpartikel mit einer mittleren Teilchengröße von 0,05 bis 2 mm.

### Beispiel 5:

In einem Wirbelschicht-Trockner werden 2 kg Sorbit, 2 kg Gelatine-Hydrolysat, (MG: ca. 10 000 Dalton) 0,1 kg Alginsäure und 0,01 kg einer Vitaminmischung vorgelegt und bei geringerer Verwirbelung etwa 0,2 kg Wasser langsam eingedüst. Es kommt zu einer starken Granulatbildung. Nach kurzer Trockenphase werden ca. 0,2 kg einer erwärmten, 50 %iger Lösung von Gummi arabicum bei starker Verwirbelung und hoher Trockenleistung auf das Granulat aufgesprüht. Man erhält ein rieselfähiges Granulat mit hoher Oberflächensprödigkeit und einem mittleren Kornspektrum von 0,5 bis 2 mm.

### Beispiel 6:

In einem Granulier- und Mischkessel werden 1,0 kg Gelatinehydrolysat (MG: ca 15 000 Dalton) und 0,5 kg Sorbit vorgelegt und vermischt. Dann werden etwa 150 g Wasser über mehrere Zweistoff-Düsen feinst verteilt, wobei die Substanzen schnell zu einem groben, stabilen, zum Verkleben Cerealien geeigneten Granulat umgewandelt werden.

Nach einer Trockenphase, bei der ein Teil des Wassers wieder entfernt wird, werden zu dem vorhandenen Granulat im all-in-Verfahren 3 kg Getreideextudate, 0,5 kg Puff-Reis, 3 kg Haferflocken, 3 kg Rosinen, 0,3 kg Frucht-Trockenstücke und 0,2 kg Orangeat zugegeben und vermischt. Auf die zum Verkleben neigende, aber noch rieselfähige Mischung wird Wasser aufgesprüht und es wird mit Warmluft nachgetrocknet. Die fertige Mischung, die noch etwa 5-8 % Wasser enthält, konmt direkt auf die Riegelfertigungs- und Verpackungsmaschine.

### Beispiel 7:

In einem Ankermischer mit Zerhacker-Einrichtung werden 33 kg Haferflocken, 25 kg Vollkorn-Crispies, 11 kg Weizenkleie, 14 kg Rosinen und 17 kg gemahlene Haselnüsse eingewogen, innig vermischt und oberflächlich mit ca. 2 kg Wasser angefeuchtet. In den laufenden Mischer werden 12 kg Bindemittelgranulat, bestehend aus 8 kg Gelatine-Hydrolysat und 4 kg Sorbit, das gemäß Beispiel 1 hergestellt ist, eingestreut oder z.B. mit einer Förderschnecke eingebracht. Falls der ursprüngliche Wassergehalt der Lebensmittel zu gering ist, wird noch etwa Wasser nachgesprüht, bis das Gemenge die gewünschte Konsistenz hat. Die Masse kann direkt zu Riegeln verarbeitet werden.

### Beispiel 8:

In einem Rotationsschaufelmischer werden 10 kg Haferflocken, 3,5 kg Vollkorn-Crispies, 3,5 kg Weizenkleie-Crispies, 1,5 kg Rosinen und 3,0 kg Mandelsplitter eingewogen und schonend vermischt. Nach einer Anfeuchtung mit ca. 0,5 kg Wasser, das langsam zudosiert oder aufgesprüht werden kann, werden bei laufendem Mischwerk 3,5 kg des Granulates aus Beispiel 5 langsam kontinuierlich zudosiert. Je nach dem ursprünglichen Wassergehalt der Zutaten und unter ständiger Beobachtung der Verklebung der Bestandteile wird eventuell noch etwas Wasser zudosiert. Am Ende des Prozesses wird durch eine kurze Trockenphase unter Vakuum oberflächlich anhaftende Feuchte soweit entzogen, daß der Gesamtwassergehalt der Mischung etwa 7 % beträgt. Danach wird das Produkt direkt in die endgültige Form gebracht und verpackt.

### Beispiel 9:

In ein doppelwandiges, auf 60 °C temperierbares Planetenrührwerk werden 10 % Fett, 22 % Joghurtpulver, 18 % Fructosesirup, 18 % Kokosflocken, 1 % Lecithin, 1 % Aroma und 10 % Magermilchpulver vorgelegt und gemischt. In die pastöse Masse werden 20 % Bindemittel enthaltend 50 % Sorbit und 50 % Gelatinehydrolysat (MG: ca. 20 000 Dalton), hergestellt nach Beispiel 1, unter Rühren eingearbeitet. Die Masse hat nach dem Rührprozeß ein granulatförmiges, plastisches Aussehen. Die Masse wird anschließend durch ein Extrudersystem mit gleichläufigen Doppelschnecken zu einem Strang extrudiert und mit Schokolade überzogen.

## Patentansprüche

1. Zuckerfreies Bindemittel für Lebensmittel, dadurch gekennzeichnet, daß es Zuckeraustauschstoff und Eiweißhydrolysat in einem Gewichtsverhältnis zwischen 3:1 und 1:3, in agglomerierter Form enthält, wobei das Eiweißhydrolysat einen mittleren Molekulargewichtsbereich von 1 000 bis 100 000 Dalton aufweist, und daß es in Granulatform mit einer Teilchengröße von 0,05 bis 2 mm vorliegt.

2. Zuckerfreies Bindemittel nach Anspruch 1, dadurch gekennzeichnet, daß es als Zuckeraustauschstoff Sorbit enthält.

3. Zuckerfreies Bindemittel nach Anspruch 1, dadurch gekennzeichnet, daß es als Eiweißhydrolysat Gelatine und/oder Klebereiweiß enthält.

4. Verwendung des Bindemittels nach Anspruch 1 bei der Herstellung von geformten, vorzugsweise Granula enthaltenden Lebensmittelmassen.

5. Verwendung des Bindemittels nach Anspruch 4 bei der Herstellung von Getreideriegeln.

## Claims

1. Sugar-free binder for foods, characterised in that it contains sugar substitute and protein hydrolysate in a weight ratio between 3:1 and 1:3, in agglomerated form, the protein hydrolysate having a mean molecular weight range from 1,000 to 100,000 daltons, and in that it occurs in the form of granules having a particle size from 0.05 to 2 mm.

2. Sugar-free binder according to Claim 1, characterised in that the binder contains sorbitol as the sugar substitute.

3. Sugar-free binder according to Claim 1, characterised in that the binder contains gelatin and/or gluten protein as the protein hydrolysate.

4. Use of the binder according to Claim 1 in the production of shaped, preferably granola-containing food compositions.

5. Use of the binder according to Claim 4 in the production of cereal bars.

## Revendications

1. Agent liant sans sucre pour les aliments, caractérisé en ce qu'il renferme un produit de substitution du sucre et un hydrolysat protéinique, sous forme agglomérée, dans un rapport pondéral compris entre 3:1 et 1:3, l'hydrolysat protéinique présentant un domaine de poids moléculaire moyen allant de 1000 à 100.000 daltons et étant présent sous forme de granules avec une grandeur de particule comprise entre 0,05 et 2 mm.

2. Agent liant sans sucre selon la revendication 1, caractérisé en ce qu'il renferme du sorbitol comme produit de substitution du sucre.

3. Agent liant sans sucre selon la revendication 1, caractérisé en ce qu'il renferme de la gélatine et/ou du gluten comme hydrolysat protéinique.

4. Mise en oeuvre de l'agent liant selon la revendication 1 pour la fabrication de pâtes d'aliments formées, renfermant de préférence des granules.

5. Mise en oeuvre de l'agent liant selon la revendication 4 pour la fabrication de tablettes de céréales.
